# EUROPÄISCHE PATENTSCHRIFT

(11) **EP 0 909 679 B1**
(45) Veröffentlichungstag und Bekanntmachung des Hinweises auf die Patenterteilung: **18.01.2006**
(21) Anmeldenummer: 98119573.8
(22) Anmeldetag: 16.10.1998
(51) Int. Cl.: B60R 5/04

(54) **Laderaumabdeckung, wie Abdeckrollo od. dgl., für den Lade- bzw. Kofferraum eines Fahrzeugs**
Luggage compartment cover, roller blind or similar, for the luggage space or boot of a vehicle
Couvercle pour le compartiment à baggages, rideau écran ou similaire pour le compartiment à baggages ou coffre d'un véhicule

(30) Priorität: 17.10.1997 DE 19745940
(43) Veröffentlichungstag der Anmeldung: 21.04.1999
(73) Patentinhaber: BOS GmbH & Co. KG, 73760 Ostfildern (DE)
(72) Erfinder: Labeur, Luc, 3010 Kessel-Lo (BE)
(74) Vertreter: Patentanwälte Ruff, Wilhelm, Beier, Dauster & Partner

(56) Entgegenhaltungen:
- EP-A- 0 524 397
- EP-A- 0 741 057
- DE-A- 4 200 021
- DE-A- 4 313 855
- FR-A- 2 714 342
- US-A- 4 277 097

## Beschreibung

Die Erfindung betrifft eine Laderaumabdeckvorrichtung entsprechend dem Oberbegriff des Anspruchs 1. Eine solche Laderaumabdeckvorrichtung ist in der EP 524 397 A beschrieben.

Zwei auf derselben geometrischen Achse angeordnete Wickelwellen sind gemäß der EP 524 397 A in einem gemeinsamen Rollogehäuse aufgenommen. Außen auf jeder Wickelwelle ist je eine Werkstoffbahn aufgewickelt und jeweils unabhängig von der anderen Werkstoffbahn so weit abroll- bzw. ausziehbar, bis die endseitige freie Randkante der Werkstoffbahn an der Lehnenrückseite eines einzelnen Fondsitzes eines Kombinations-Personenkraftwagens lösbar zu befestigen ist.

Die Besonderheit der durch die EP 524 397 A bekannten Vorrichtung besteht darin, daß das Rollogehäuse endstirnseitig in relativ kurzen Führungsschienen in und entgegen der Fahrtrichtung gleitbar und hinsichtlich der Gleitrichtung stufenweise oder stufenlos arretierbar geführt ist. Die beiden kurzen Führungsschienen erstrecken sich in Fahrzeuglängsrichtung und sind jeweils hinter einer C-Säule und zugleich hinter einer Fond-Sitzlehne befestigt.

Mit der bekannten Laderaumabdeckvorrichtung wird der Vorteil erzielt, daß durch Verschiebung des Rollogehäuses eine Anpassung an die Position der Fondsitze in Fahrzeuglängsrichtung vorgenommen werden kann.

Ausgehend von der Laderaumabdeckvorrichtung gemäß der EP 524 397 A, liegt der Erfindung die Aufgabe zugrunde, die bekannte Laderaumabdeckvorrichtung im Sinne einer abgewandelten Zweckbestimmung weiterzuentwickeln.

Diese Aufgabe wird entsprechend der Erfindung gemeinsam mit den Merkmalen des Oberbegriffs des Anspruchs 1 durch die Merkmale seines Kennzeichenteils gelöst.

Entsprechend der Erfindung geschieht dies also dadurch, daß die jeweilige freie Randkante mindestens einer Werkstoffbahn gleichsam wie bei der Schließstellung der Laderaumabdeckung insbesondere lösbar zu befestigen ist und daß eine Aufnahmehalterung für die mindestens eine Wickelwelle quer zur Achse der jeweiligen Wickelwelle in Schließrichtung der Abdeckvorrichtung entlang von Führungselementen translatorisch verschiebbar ist.

Die etwa im Parallelabstand angeordneten, entsprechend der Laderaumbreite voneinander distanzierten Führungselemente erstrecken sich über die gesamte Länge des Laderaums im Abstand oberhalb der Laderaum-Bodenfläche.

Die Aufnahmehalterung ist sowohl in ihrer durch die Schließstellung bestimmten Endlage als auch gegebenenfalls in Zwischenstellungen lösbar zu arretieren.

Die lösbare Arretierung in den Zwischenstellungen kann dabei stufenlos oder stufenweise erfolgen.

Die Aufnahmehalterung ist von einem die mindestens eine Wickelwelle aufnehmenden Rollogehäuse gebildet.

Das Rollogehäuse kann dabei in seiner äußeren Form ähnlich einer Hutablage ausgebildet sein, welche eine zum Fahrzeugdach nach oben weisende Ablagefläche bildet. Wenn also das Rollogehäuse bei eingerollter Werkstoffbahn rückwärts an die Fondsitze herangeschoben ist, kann das Rollogehäuse besonders günstig von den Fondsitz-Fahrgästen als Hutablage verwendet werden.

Die Aufnahmehalterung ist mit mindestens einer Griffhandhabe versehen, welche insbesondere eine Zughandhabung der Aufnahmehalterung in Schließrichtung der Laderaumabdeckvorrichtung gestattet.

Die mindestens eine Wickelwelle weist einen motorischen Antrieb auf, welcher in bekannter Weise von einem entgegen Abrollrichtung der Werkstoffbahn wirkenden Motor, insbesondere Federmotor, bestehen kann.

Die freie Randkante bzw. der freie Randbereich der Werkstoffbahn weist. Befestigungselemente auf, die der fahrzeugseitigen lösbaren Befestigung der freien Randkante dienen.

Insbesondere ist eine lösbare Befestigung der freien Randkante der Werkstoffbahn rückseitig an einer Sitzlehne vorgesehen.

Hierzu kann die freie Randkante mit mindestens einem etwa patrizenartigen Vorsprung versehen sein, welcher in eine karosserieseitig befestigte matrizenartige Riegelöffnung eingreift.

Dabei kann die Riegelöffnung mit einem steuerbaren beweglichen Riegelelement oder mit einem hinterschnittenen Federelement versehen sein, wobei letzteres bei einem bestimmten Grenzwert einer Zugbelastung den als patrizenartigen hinterschnittenen Riegelzapfen ausgebildeten patrizenartigen Vorsprung freigibt.

Ein weiteres erfindungsgemäßes Merkmal kann darin bestehen, daß die Aufnahmehalterung (Rollogehäuse) einschließlich der in ihr befindlichen mindestens einen Wikkelwelle nach Lösen des freien Randbereichs (Randkante) der mindestens einen Werkstoffbahn aus der fahrzeugseitigen Befestigung entlang den Längsführungselementen aus diesen z.B. rückwärtig hinaus verschoben und so für den Fall entnommen werden kann, daß das Rollogehäuse beim Transport von besonders sperrigem Ladegut stören sollte. So kann beispielsweise das gesamte Rollogehäuse mit Inhalt durch die Hecktüre oder Heckklappe eines Kombinations-Kraftwagens oder eines Multivans nach hinten herausgezogen und entnommen werden.

Ein besonderer erfindungsgemäßer Vorteil besteht darin, daß bei unabhängig voneinander verschieblichen Fahrzeugsitzen die Werkstoffbahn entsprechend der Anzahl der Fahrzeugsitze, die der Befestigung des jeweiligen Randbereichs der Werkstoffbahn dienen, in mehrere Teilbahnen (Längssteilbahnen) längsgeteilt ist.

So können beispielsweise zwei Fahrzeugsitze in einem Multivan in und entgegen der Fahrtrichtung verschieblich und arretierbar sein, wobei die Werkstoffbahn in zwei Längsteilbahnen unterteilt ist.

Jede Längsteilbahn ist unabhängig von der anderen aufrollbar und abrollbar. Auf diese Weise gelingt es, unabhängig davon, in welcher Verschiebelage sich der zugeordnete Sitz befindet, jede Längsteilbahn straff zu halten, da jede Längsteilbahn individuell abrollbar oder aufrollbar ist.

Jeder Längsteilbahn ist eine gesonderte Wickelwelle zugeordnet.

Hierbei können sich alle Wickelwellen auf einer gemeinsamen geometrischen Achse befinden. Es aber auch möglich, unterschiedliche Wickelwellen sowohl hinsichtlich ihrer geometrischen Längsachsen als auch gegebenenfalls quer zu ihren geometrischen Längsachsen versetzt zueinander anzuordnen.

Diese Anordnung bietet die Voraussetzung dafür, daß sich zwei einander benachbarte Längsteilbahnen an ihren benachbarten Längsrändern überlappen können. Eine derartige Überlappung benachbarter Längsränder ist insbesondere dann von Vorteil, wenn die Laderaumabdeckung primär dem Sichtschutz dienen soll.

In weiterer Ausgestaltung der Erfindung ist der Aufnahmehalterung (z.B. Rollogehäuse) eine Arretiervorrichtung zugeordnet, welche mittels einer Handhabe in ihre Löse- oder in ihre Arretierstellung bezüglich der Längsführungselemente versetzt werden kann. Dabei kann die Arretiervorrichtung als Dreh- oder Schwenkriegel ausgebildet sein, welcher mittels einer Schwenkhandhabe in seine Arretierstellung eingeschwenkt oder aus dieser herausgeschwenkt werden kann.

Generell kann jeder Riegel unabhängig von der Form seiner Bewegungsbahn mit den Längsführungselementen zugeordneten Anschlägen, also auch z.B. mit Anschlägen innerhalb von jeweiligen Führungsschienen, zusammenwirken.

Ein wesentliches Erfindungsmerkmal kann darin bestehen, daß einer jeden Wickelwelle ein Richtgesperre zugeordnet ist, welches ein ungewolltes Ausziehen bzw. Abrollen der Werkstoffbahn bzw. von Längsteilbahnen verhindert. Eine derartige Anordnung ist in der DE 197 08 192.4 beschrieben.

In den Zeichnungen ist ein bevorzugtes Ausführungsbeispiel entsprechend der Erfindung schematisch dargestellt. Es zeigt
Fig. 1 eine perspektivische, zum Teil aufgebrochene Teildarstellung einer Laderaumabdeckvorrichtung mit dem hinteren Laderaumbereich beispielsweise eines Kombinations-Personenkraftwagens,
Fig. 2 die perspektivische Rückansicht einer Fond-Sitzlehne mit einer Befestigungsanordnung für den vorderen freien Rand einer einzelnen Werkstoff-Längsteilbahn,
Fig. 3 eine Darstellung einer Arretiervorrichtung für eine Aufnahmehalterung, wobei zur Verdeutlichung etliche Bauteile weggelassen sind und
Fig. 4 eine perspektivische Darstellung etwa des Bereichs der Laderaumabdeckvorrichtung, auf welchen in Fig. 3 mit einem Pfeil entsprechend der Bezugsziffer IV hingewiesen ist.

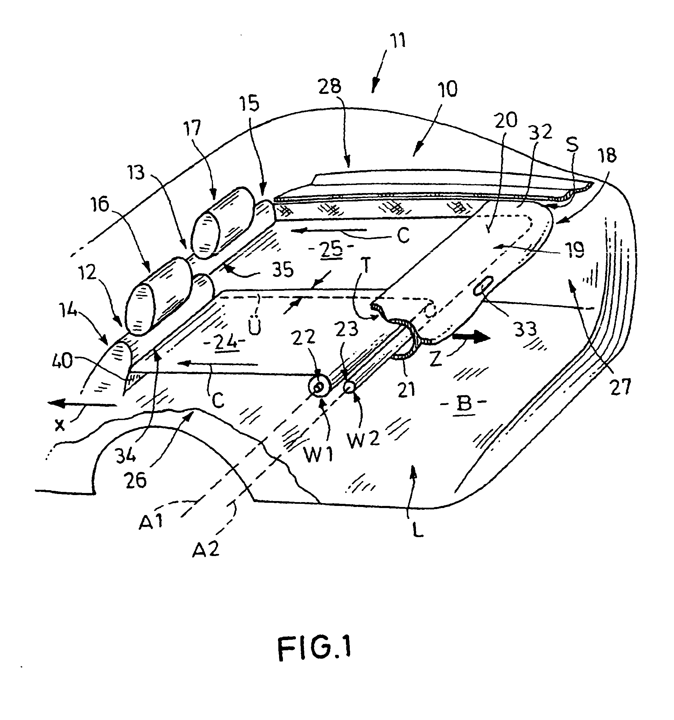

In Fig. 1 ist eine Laderaumabdeckvorrichtung insgesamt mit der Bezugsziffer 10 bezeichnet. Die Laderaumabdeckvorrichtung 10, welche zum besseren Verständnis zum Teil aufgebrochen bzw. abgebrochen dargestellt ist, ist im Heckbereich 11 eines Multivans aufgenommen, welcher zwei Fond-Sitze 12, 13 aufweist, von denen nur die Sitzlehnen 14, 15 mit ihren Kopfstützen 16, 17 zu sehen sind. Der Laderaum der gezeigten Anordnung trägt die Bezugsziffer L, dessen Laderaumboden mit B bezeichnet ist.

Ein Hauptbestandteil der Laderaumabdeckvorrichtung. 10 ist ein Rollogehäuse 18, dessen nach oben weisender Bereich 19 etwa die Form einer Hutablage mit einer Ablagefläche 20 aufweist. Unten an den oberen Bereich 19 schließt sich ein noch oben offener etwa wannen- bzw. schalenförmiger Bereich 21 an, welcher zwei Wickelwellen W1 und W2 aufnimmt, deren geometrische Wickelwellenachsen A1 und A2 bezüglich der Fahrtrichtung x zueinander versetzt sind.

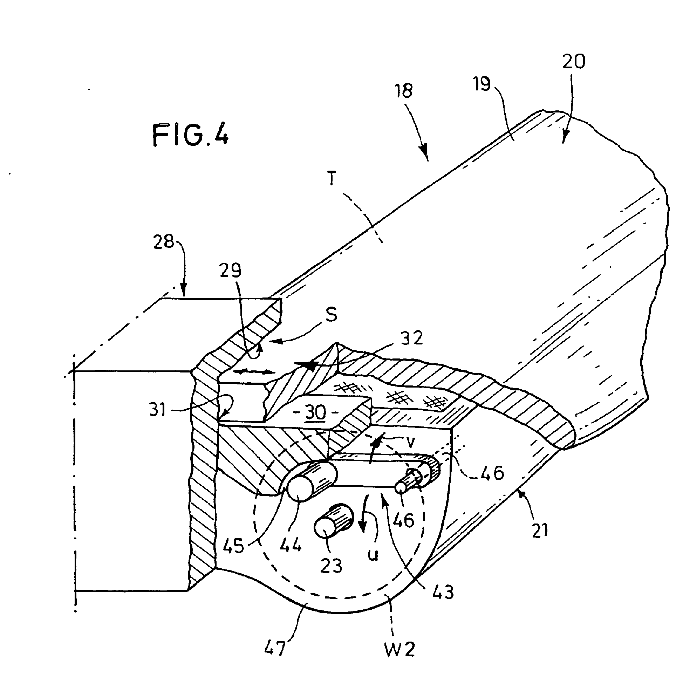

Die beiden Lagerachsen 22 und 23 der Wickelwellen W1 und W2 sind in nicht näher gezeigter weise in Fig. 1 in nicht dargestellten seitlichen Lagerwangen (vgl. Fig. 4 Pos. 47) des Rollogehäuses 18 aufgenommen.

Die vorbeschriebene versetzte Anordnung der beiden Wickelwellen W1 und W2 gestattet es, jede der beiden Wikkelwellen W1 und W2 mit je einer gesonderten Werkstoff-Längsteilbahn 24, 25 auszustatten und dabei so anzuordnen, daß diese an ihren beiden benachbarten Längsrändern eine Überlappungszone Ü bilden.

Jede Wickelwelle W1 und W2 erstreckt sich durch das gesamte Rollogehäuse 18 hindurch zwischen dessen beiden seitlichen Lagerwangen 47. Jede Wickelwelle W1 und W2 weist einen motorischen Antrieb auf, derart, daß die beiden Längsteilbahnen 24, 25 nur entgegen dem Drehmoment je eines motorischen Antriebs, beispielsweise je eines Federmotors, ausgezogen bzw. abgerollt werden können. Der Durchführungs- bzw. Tuchschlitz des Rollogehäuses 18 für die Werkstoffbahnen 24, 25, welcher in Fahrtrichtung x nach vorn zeigt, ist mit T bezeichnet.

An beiden Karosserie-Längsflächen 26, 27 ist innen jeweils ein Längsführungselement 28 im Abstand oberhalb des Laderaumbodens B befestigt. Von den beiden Längsführungselementen 28 ist in Fig. 1 nur ein Längsführungselement 28 gezeigt.

Das andere Längsführungselement 28 ist hingegen zum Teil aus Fig. 4 ersichtlich.

Jedes Längsführungselement 28 bildet einen sich etwa horizontal erstreckenden Führungsschlitz S, welcher oberseitig von einer streifenförmigen Deckenfläche 29, unterseitig von einer streifenförmigen Basisfläche 30 und außenseitig von einer vertikalen streifenförmigen Führungsfläche 31 begrenzt ist. Die Führungsflächen 29, 30, 31 eines jeden Längsführungselements 28 ergeben somit jeweils einen etwa C-förmigen Führungsschlitz S. Die beiden Öffnungen der Führungsschlitze S weisen aufeinander zu.

In jeden Führungsschlitz S greift ein Führungsfortsatz 32, gebildet vom oberen Bereich 19 des Rollogehäuses 18, ein. Da das Rollogehäuse 18 an seinen beiden stirnseitigen Enden jeweils einen Führungsfortsatz 32 aufweist, der jeweils in einem Führungsschlitz S eines Längsführungselements 28 translatorisch verschieblich geführt ist, kann das Rollogehäuse 18 in Fahrtrichtung x und entgegen der Fahrtrichtung x bewegt werden.

Die Laderaumabdeckvorrichtung 10 funktioniert wie folgt:

Im Ruhezustand kann das Rollogehäuse 18 bei gänzlich aufgewickelten Längsteilbahnen 24, 25 entweder (in Fig. 1 dargestellt) zum hinteren Bereich des Laderaums L oder zu dessen vorderem Bereich benachbart den Sitzlehnen 14, 15 verschoben werden. Ist letzteres der Fall, so kann die Ablagefläche 20 als solche verwendet werden.

Um das Rollogehäuse 10 verschieben zu können, weist dessen oberer Bereich 19 hinten eine Grifföffnung 33 auf.

Wenn die Laderaumabdeckvorrichtung 10 in Betrieb genommen werden soll, verschiebt man das Rollogehäuse 18 zweckmäßig in Fahrtrichtung x nach vorn bis nahezu an die Hinterseiten der Sitzlehnen 14 und 15 heran.

Jeder vordere freie Randbereich 34, 35 einer jeden Längsteilbahn 24, 25 ist mit einer Rand- und Handhabungsleiste 36 versehen, die in Fahrtrichtung x nach vorn vorragende hinterschnittene patrizenartige Vorsprünge 37 aufweist, welche jeweils mit Riegelöffnungen 38 von Riegelelementen 39 einer Riegelleiste 40 lösbar arretierend zusammenwirken. Jede Sitzlehne 14, 15 trägt hinten an ihrem oberen Lehnenbereich je eine gesonderte Riegelleiste 40.

Jedes Riegelelement 39 stellt einen etwa Ω-förmig gebogenen Federbandstahl-Abschnitt dar, in dessen jeweiligem Innenraum 41 je ein hinterschnittener Kopf 42 eines patrizenartigen Vorsprungs 37 schnappverrastend form- und kraftschlüssig, im wesentlichen kraftschlüssig, aufgenommen ist.

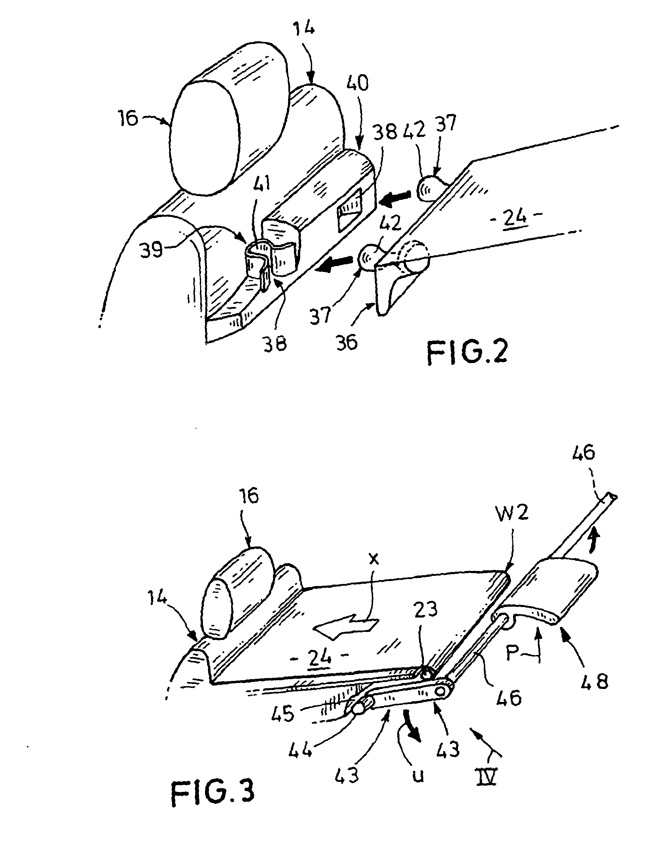

Anstelle der in Fig. 2 gezeigten Ausführungsform einer lösbaren Verriegelung ist es selbstverständlich auch möglich, die patrizerartigen Vorsprünge 37 oder ähnliche Gebilde innerhalb einer abgewandelten Riegelleiste 40 in steuerbaren Riegelöffnungen rein formschlüssig lösbar zu arretieren.

Wenn beide Randleisten 36 der beiden Längsteilbahnen 24, 25 in den beiden Riegelleisten 40 der beiden Sitzlehnen 14, 15 lösbar arretiert sind, kann das Rollogehäuse 18 entgegen der Fahrtrichtung x im Schließsinne der Bahnen 24, 25 nach rückwärts entgegen x gezogen und mittels eines Schwenkriegels 43, der einen Riegelzapfen 44 aufweist, an einem Anschlag 45 des jeweiligen Längsführungselements 28 lösbar arretiert werden.

Zur Lagerung und Drehmitnahme jedes Schwenkriegels 43 ist eine in beiden Lagerwangen 47 des Rollogehäuses 18 gelagerte Betätigungswelle 46 vorgesehen, auf welcher eine unterhalb des Rollogehäuses 18 befindliche Schwenkbetätigungshandhabe 48 drehfest ist. Auf diese Weise können mit einer einzigen Schwenkbetätigungshandhabe 48 die beiden beidendig auf der Welle 46 angeordneten Schwenkriegel 43 zugleich betätigt werden. Wenn man demnach in Richtung P von unten her gegen die Schwenkbetätigungshandhabe 48 drückt, bewegt sich der Schwenkriegel 43 mit seinem Riegelzapfen 44 von dem Anschlag 45 weg in Löserichtung u nach unten. Analog in umgekehrter Weise kann eine Betätigung des Schwenkriegels 43 in Verriegelungsrichtung v nach oben erfolgen.

Aus vorstehender Beschreibung ist auch zu erkennen, daß das Rollogehäuse 18 samt Wickelwellen W1, W2 und den darauf aufgerollten Bahnen 24, 25 im Bedarfsfall entgegen der Fahrtrichtung x gänzlich nach hinten aus den Führungsschlitzen S herausgezogen und aus dem Fahrzeug entnommen werden kann.

## Patentansprüche

1. Laderaumabdeckvorrichtung (10), wie Abdeckrollo od.dgl., für den Lade- oder Kofferraum (L) eines Fahrzeugs, wie z.B. eines Kombinations-Personenkraftwagens, mit einer Aufnahmehalterung (18), wie z.B. einem Rollogehäuse, für mindestens eine Wickelwelle (W1, W2) zur Aufnahme mindestens einer Werkstoffbahn (24, 25), deren innenseitiger Randbereich an der Wickelwelle (W1, W2) befestigt und deren endseitiger freier Randbereich (34, 35) fahrzeugseitig (bei 40) lösbar zu befestigen ist, wobei die Aufnahmehalterung (18) an ihren beiden Stimenden (bei 32) in je einem Längsführungselement (28) aufgenommen und in den etwa im Parallelabstand entsprechend der Breite des Laderaums (L) distanziert voneinander und im Abstand oberhalb des Laderaumbodens (B) angeordneten beiden Längsführungselementen (28) quer zur Achse (A1, A2) der Wickelwelle (W1, W2) translatorisch verschiebbar und bezüglich der Längsführungselemente (28) arretierbar ist, und wobei der endseitig freie Randbereich (34, 35) der mindestens einen Werkstoffbahn (24, 25) bei jeder Relativposition der Aufnahmehalterung (18) bezüglich der Längsführungselemente (28) fahrzeugseitig (bei 40) insbesondere lösbar zu befestigen ist, **dadurch gekennzeichnet, daß** der freie Randbereich (34, 35) der mindestens einen Werkstoffbahn (24, 25) sowohl in Offenstellung der Laderaumabdeckvorrichtung (10) als auch in Schließstellung der Laderaumabdeckvorrichtung (10) insbesondere lösbar zu befestigen ist, daß sich die Längsführungselemente (28) über die gesamte Länge des Laderaums (L) erstrecken, und daß die Aufnahmehalterung (18) zur Herbeiführung der Schließstellung der Laderaumabdeckvorrichtung (10) in Schließrichtung (Z) der Laderaumabdeckvorrichtung (10) entlang den Längsführungselementen (28) translatorisch verschiebbar ist.

2. Laderaumabdeckvorrichtung nach Anspruch 1, **dadurch gekennzeichnet, daß** die Aufnahmehalterung (18) bezüglich der Längsführungselemente (28) sowohl in ihrer durch die Schließstellung bestimmten Endlage als auch gegebenenfalls in Zwischenstellungen lösbar zu arretieren ist.

3. Laderaumabdeckvorrichtung nach Anspruch 2, **dadurch gekennzeichnet, daß** die lösbare Arretierung der Aufnahmehalterung (18) bezüglich der Längsführungselemente (28) stufenlos oder stufenweise erfolgt.

4. Laderaumabdeckvorrichtung nach einem der Ansprüche 1 bis 3, **dadurch gekennzeichnet, daß** die als Rollogehäuse (18) ausgebildete Aufnahmehalterung in ihrer äußeren Form ähnlich einer Hutablage ausgebildet ist, welche eine zum Fahrzeugdach nach oben weisende Ablagefläche (20) bildet.

5. Laderaumabdeckvorrichtung nach einem der Ansprüche 1 bis 4, **dadurch gekennzeichnet, daß** die Aufnahmehalterung (18) mit mindestens einer Griffhandhabe (33) versehen ist, welche insbesondere eine Zughandhabung der Aufnahmehalterung (18) in Schließrichtung (Z) der Laderaumabdeckvorrichtung (10) gestattet.

6. Laderaumabdeckvorrichtung nach einem der Ansprüche 1 bis 5, **dadurch gekennzeichnet, daß** die von der Aufnahmehalterung (18) aufgenommene Wickelwelle (W1, W2) einen motorischen Antrieb aufweist, welcher von einem entgegen der Abrollrichtung (C) der Werkstoffbahn (24, 25) wirkenden Motor, insbesondere Federmotor, gebildet ist.

7. Laderaumabdeckvorrichtung nach einem der Ansprüche 1 bis 6, **dadurch gekennzeichnet, daß** der freie Randbereich (34, 35) der Werkstoffbahn (24, 25) Befestigungselemente (37) aufweist, die der fahrzeugseitigen (bei 40) lösbaren Befestigung des freien Randbereichs (34, 35) dienen.

8. Laderaumabdeckvorrichtung nach einem der Ansprüche 1 bis 7, **dadurch gekennzeichnet, daß** der freie Randbereich (34, 35) mit mindestens einem etwa patrizenartigen Vorsprung (37) versehen ist, welcher in eine fahrzeug- bzw. karrosserieseitig befestigte matrizenartige Riegelöffnung (38) eingreift.

9. Laderaumabdeckvorrichtung nach Anspruch 8, **dadurch gekennzeichnet, daß** die Riegelöffnung (38) mit einem steuerbaren beweglichen Riegelelement versehen ist.

10. Laderaumabdeckvorrichtung nach Anspruch 8, **dadurch gekennzeichnet, daß** die Riegelöffnung (38) mit einem hinterschnittenen Federelement versehen ist.

11. Laderaumabdeckvorrichtung nach Anspruch 10, **dadurch gekennzeichnet, daß** das hinterschnittene Federelement bei einem bestimmten Grenzwert einer Zugbelastung der Werkstoffbahn (W1, W2) den als patrizenartigen hinterschnittenen Riegezapfen (37) ausgebildeten patrizenartigen Vorsprung freigibt.

12. Laderaumabdeckvorrichtung nach einem der Ansprüche 1 bis 11, **dadurch gekennzeichnet, daß** die Aufnahmehalterung (18) einschließlich der in ihr befindlichen Wickelwelle (W1, W2) nach Lösen des freien Randbereichs (34, 35) der Werkstoffbahn (24, 25) aus der fahrzeugseitigen (bei 40) Befestigung entlang den Längsführungselementen (28) aus diesen z.B. rückwärtig entgegen der Fahrtrichtung (x) hinaus verschoben und entnehmbar ist.

13. Laderaumabdeckvorrichtung nach einem der Ansprüche 11 bis 12, **dadurch gekennzeichnet, daß** unterschiedliche Wickelwellen (W1, W2) entlang ihren geometrischen Längsachsen (A1, A2) längsversetzt und/oder mit ihren geometrischen Längsachsen (A1, A2) querversetzt zueinander angeordnet sind.

14. Laderaumabdeckvorrichtung nach Anspruch 13, **dadurch gekennzeichnet, daß** sich zwei einander benachbarte Längsteilbahnen (24, 25) an ihren benachbarten Längsrändern überlappen (bei Ü).

15. Laderaumabdeckvorrichtung nach einem der Ansprüche 1 bis 14, **dadurch gekennzeichnet, daß** der Aufnahmehalterung (18) eine Arretiervorrichtung (bei 43) zugeordnet ist, welche mittels einer Handhabe (48) in ihre Löse- oder in ihre Arretierstellung bezüglich der Längsführungselemente (28) zu versetzen ist.

16. Laderaumabdeckvorrichtung nach Anspruch 15, **dadurch gekennzeichnet, daß** die Arretiervorrichtung als Dreh- oder Schwenkriegel (43) ausgebildet ist, welcher mittels einer Schwenkhandhabe (48) in seine Arretierstellung eingeschwenkt oder aus dieser herausgeschwenkt werden kann.

17. Laderaumabdeckvorrichtung nach Anspruch 15 oder nach Anspruch 16, **dadurch gekennzeichnet, daß** ein Riegel (44) der Arretiervorrichtung (bei 43) unabhängig von der Form seiner Bewegungsbahn mit den Längsführungselementen (28) zugeordneten Anschlägen (45) zusammenwirkt.

18. Laderaumabdeckvorrichtung nach einem der Ansprüche 1 bis 17, **dadurch gekennzeichnet, daß** einer jeden Wickelwelle (W1, W2) ein Richtgesperre zugeordnet ist, welches ein ungewolltes Ausstehen bzw. Abrollen der Werkstoffbahn bzw. der Längsteilbahn (24, 25) verhindert.

## Claims

1. A cargo space covering arrangement (10), such as a covering roller blind or the like, for the cargo space or luggage compartment (L) of a vehicle, such as, for example, an estate car, having a receiving holder (18), such as, for example, a roller blind housing, for at least one winding shaft (W1, W2) for receiving at least one web (24, 25) of material the inside edge region of which is fastened to the winding shaft (W1, W2) and the free end edge region (34, 35) of which is to be releasably fastened to the vehicle (at 40), wherein the receiving holder (18) is received at each of its two ends (at 32) in a respective longitudinal guide element (28) and is translatable transversely to the axis (A1, A2) of the winding shaft (W1, W2) in the longitudinal guide elements (28), which are spaced apart in approximately parallel relationship at a distance corresponding to the width of the cargo space (L) and are arranged at a distance above the floor (B) of the cargo space, and can be arrested relative to the longitudinal guide elements (28), and wherein the free end edge region (34, 35) of the at least one web (24, 25) of material is to be fastened, especially releasably, to the vehicle (at 40) in each relative position of the receiving holder (18) relative to the longitudinal guide elements (28), **characterised in that** the free edge region (34, 35) of the at least one web (24, 25) of material is to be fastened, especially releasably, both in the open position of the cargo space covering arrangement (10) and in the closed position of the cargo space covering arrangement (10), the longitudinal guide elements (28) extend over the entire length of the cargo space (L), and the receiving holder (18) is translatable along the longitudinal guide elements (28) in the closing direction (Z) of the cargo space covering arrangement (10) to produce the closed position of the cargo space covering arrangement (10).

2. A cargo space covering arrangement according to claim 1, **characterised in that** the receiving holder (18) is to be releasably arrested relative to the longitudinal guide elements (28) both in its end position, which is determined by the closed position, and, where applicable, in intermediate positions.

3. A cargo space covering arrangement according to claim 2, **characterised in that** the releasable arresting of the receiving holder (18) relative to the longitudinal guide elements (28) takes place in a stepwise or continuously adjustable manner.

4. A cargo space covering arrangement according to any one of claims 1 to 3, **characterised in that** the receiving holder in the form of a roller blind housing (18) is in its external shape of a construction resembling a parcel shelf that forms a shelf surface (20) facing upwards towards the roof of the vehicle.

5. A cargo space covering arrangement according to any one of claims 1 to 4, **characterised in that** the receiving holder (18) is provided with at least one grip handle (33) which in particular permits the receiving holder (18) to be pulled in the closing direction (Z) of the cargo space covering arrangement (10).

6. A cargo space covering arrangement according to any one of claims 1 to 5, **characterised in that** the winding shaft (W1, W2) received by the receiving holder (18) has a motor drive which is formed by a motor, especially a spring motor, that acts counter to the unrolling direction (C) of the web (24, 25) of material.

7. A cargo space covering arrangement according to any one of claims 1 to 6, **characterised in that** the free edge region (34, 35) of the web (24, 25) of material has fastening elements (37) which serve the purpose of releasably fastening the free edge region (34, 35) to the vehicle (at 40).

8. A cargo space covering arrangement according to any one of claims 1 to 7, **characterised in that** the free edge region (34, 35) is provided with at least one approximately male-part-like projection (37) which is engaged by a female-part-like locking aperture (38) fastened to the vehicle or the vehicle body.

9. A cargo space covering arrangement according to claim 8, **characterised in that** the locking aperture (38) is provided with a controllably movable locking element.

10. A cargo space cover according to claim 8, **characterised in that** the locking aperture (38) is provided with an undercut spring element.

11. A cargo space covering arrangement according to claim 10, **characterised in that**, at a certain limit of a tensile load exerted by the web (W1, W2) of material, the undercut spring element releases the male-part-like projection in the form of a male-part-like undercut locking pin (37).

12. A cargo space covering arrangement according to any one of claims 1 to 11, **characterised in that**, after release of the free edge region (34, 35) of the web (24, 25) of material from its attachment (at 40) to the vehicle, the receiving holder (18) including the winding shaft (W1, W2) disposed therein can be pushed along and out of the longitudinal guide elements (28), for example backwards counter to the driving direction (x), and removed.

13. A cargo space covering arrangement according to any one of claims 1 to 12, **characterised in that** different winding shafts (W1, W2) are longitudinally offset from one another along their geometrical longitudinal axes (A1, A2) and/or are arranged with their geometrical longitudinal axes (A1, A2) offset transversely from one another.

14. A cargo space covering arrangement according to claim 13, **characterised in that** two adjacent longitudinal part-webs (24, 25) overlap at their adjacent longitudinal edges (at Ü).

15. A cargo space covering arrangement according to any one of claims 1 to 14, **characterised in that** the receiving holder (18) is associated with an arresting device (at 43) which is to be moved into its releasing position or into its arresting position relative to the longitudinal guide elements (28) by means of a handle (48).

16. A cargo space covering arrangement according to claim 15, **characterised in that** the arresting device is constructed in the form of a swivelling or pivoting bar (43) which can be pivoted into or out of its arresting position by means of a pivoting handle (48).

17. A cargo space covering arrangement according to claim 15 or claim 16, **characterised in that** a locking bolt (44) of the arresting device (at 43) cooperates with stops (45) associated with the longitudinal guide elements (28) irrespective of the shape of its path of movement.

18. A cargo space covering arrangement according to any one of claims 1 to 17, **characterised in that** each winding shaft (W1, W2) is associated with a detent device which prevents unintentional extension or unrolling of the web of material or the longitudinal part-web (24, 25).

## Revendications

1. Dispositif de recouvrement d'un espace de chargement (10), comme un store de recouvrement ou un dispositif semblable pour l'espace de chargement ou le coffre (L) d'un véhicule, comme par ex. d'une automobile break, avec un support de logement (18), comme par ex. un boîtier de store, pour au moins un arbre d'enroulement (W1, W2) pour le logement d'au moins une bande de matériau (24, 25) dont la zone de bord côté intérieur est fixée sur l'arbre d'enroulement (W1, W2)et dont la zone de bord libre côté extrémité (34, 35) peut être fixée côté véhicule (au niveau de 40) de manière amovible, chacune des deux extrémités frontales (au niveau de 32) du support de logement (18) étant logée dans un élément de guidage longitudinal (28) et pouvant être déplacée par translation approximativement jusqu'à l'écart parallèle correspondant à la largeur de l'espace de chargement (L) avec un écart l'une par rapport à l'autre et pouvant être arrêtée avec un écart correspondant aux deux éléments de guidage longitudinaux (28) disposés au-dessus du fond de l'espace de chargement (B) transversalement à 1' axe (A1, A2) de l'arbre d'enroulement (W1, W2), et la zone de bord libre (34, 35) à l'extrémité d'au moins une bande de matériau (24, 25) pouvant en particulier être fixée de manière amovible dans chaque position relative du support de logement (18) par rapport aux éléments de guidage longitudinaux (28) côté véhicule (au niveau de 40), **caractérisé en ce que** la zone de bord libre (34, 35) d'au moins une bande de matériau (24, 25) peut être fixée de manière amovible tant en position ouverte du dispositif de recouvrement de l'espace de chargement (10) qu'en position fermée du dispositif de recouvrement de l'espace de chargement (10), **en ce que** les éléments de guidage longitudinal (28) s'étendent sur toute la longueur de l'espace de chargement (L) et **en ce que** le support de logement (18) servant à provoquer la fermeture du dispositif de recouvrement de l'espace de chargement (10) dans le sens de la fermeture (Z) du dispositif de recouvrement de l'espace de chargement (10) peut être déplacé par translation le long des éléments de guidage longitudinaux (28).

2. Dispositif de recouvrement de l'espace de chargement selon la revendication 1, **caractérisé en ce que** le support de logement (18) peut être arrêté de manière amovible par rapport aux éléments de guidage longitudinaux (28) tant dans sa position finale déterminée par la fermeture que, le cas échéant, dans des positions intermédiaires.

3. Dispositif de recouvrement de l'espace de chargement selon la revendication 2, **caractérisé en ce que** l'arrêt amovible du support de logement (18) par rapport aux éléments de guidage longitudinaux (28) est effectué de manière continue ou par étapes.

4. Dispositif de recouvrement de l'espace de chargement selon une des revendications 1 à 3, **caractérisé en ce que** le support de logement réalisé comme boîtier de store (18) est réalisée de par sa forme extérieure de manière semblable à une plage arrière qui forme une surface de rangement (20) dirigée vers le toit du véhicule.

5. Dispositif de recouvrement de l'espace de chargement selon une des revendications 1 à 4, **caractérisé en ce que** le support de logement (18) est doté d'au moins une poignée (33) qui permet en particulier une traction du support de logement (18) dans le sens de fermeture (Z) du dispositif de recouvrement de l'espace de chargement (10).

6. Dispositif de recouvrement de l'espace de chargement selon une des revendications 1 à 5, **caractérisé en ce que** l'arbre d'enroulement (W1, W2) logé dans le support de logement (18) comporte un entraînement à moteur qui est formé par un moteur qui agit dans le sens contraire au sens de déroulement (C) de la bande de matériau (24, 25), en particulier par un moteur à ressort.

7. Dispositif de recouvrement de l'espace de chargement selon une des revendications 1 à 6, **caractérisé en ce que** la zone de bord libre (34, 35) de la bande de matériau (24, 25) comporte des éléments de fixation (37) qui servent à la fixation amovible côté véhicule (au niveau de 40) de la zone de bord libre (34, 35).

8. Dispositif de recouvrement de l'espace de chargement selon une des revendications 1 à 7, **caractérisé en ce que** la zone de bord libre (34, 35) est dotée d'au moins une saillie (37) ressemblant approximativement à un poinçon qui se met en prise dans une ouverture de verrouillage (38) ressemblant à un poinçon fixée côté véhicule et/ou carrosserie.

9. Dispositif de recouvrement de l'espace de chargement selon la revendication 8, **caractérisé en ce que** l'ouverture de verrouillage (38) est dotée d'un élément de verrouillage mobile pouvant être commandé.

10. Dispositif de recouvrement de l'espace de chargement selon la revendication 8, **caractérisé en ce que** l'ouverture de verrouillage (38) est dotée d'un élément à ressort contre-dépouillé.

11. Dispositif de recouvrement de l'espace de chargement selon la revendication 10, **caractérisé en ce que** l'élément à ressort contre-dépouillé libère à une valeur limite déterminée d'une charge de traction de la bande de matériau (W1, W2) la saillie contre-dépouillée ressemblant à un poinçon réalisée comme boulon de verrouillage (37) contre-dépouillé ressemblant à un poinçon.

12. Dispositif de recouvrement de l'espace de chargement selon une des revendications 1 à 11, **caractérisé en ce que** le support de logement (18), y compris l'arbre d'enroulement (W1, W2) qui se trouve dans ce dernier, peut être déplacé vers l'extérieur et enlevé des éléments de guidage longitudinaux (28) le long de ces derniers, par ex. vers l'arrière dans le sens contraire au sens de roulement (x), après qu'on a détaché la zone de bord libre (34, 35) de la bande de matériau (24, 25) de la fixation côté véhicule (au niveau de 40).

13. Dispositif de recouvrement de l'espace de chargement selon une des revendications 1 à 12, **caractérisé en ce que** des arbres d'enroulement différents (W1, W2) sont décalés longitudinalement le long de leurs axes géométriques longitudinaux (A1, A2) et/ou disposés décalés transversalement les uns par rapport aux autres avec leurs axes géométriques longitudinaux (A1, A2).

14. Dispositif de recouvrement de l'espace de chargement selon la revendication 13, **caractérisé en ce que** deux bandes partielles longitudinales voisines (24, 25) se chevauchent au niveau de leurs bords longitudinaux voisins (au niveau de Ü).

15. Dispositif de recouvrement de l'espace de chargement selon une des revendications 1 à 14, **caractérisé en ce qu'**un dispositif d'arrêt (au niveau de 43), dont la position de détachement ou d'arrêt par rapport aux éléments de guidage longitudinaux (28) peut être modifiée au moyen d'une poignée (48) est affecté au support de logement (18).

16. Dispositif de recouvrement de l'espace de chargement selon la revendication 15, **caractérisé en ce que** le dispositif d'arrêt est réalisé comme verrou rotatif ou pivotant (43) qu'on peut faire pivoter dans sa position d'arrêt ou auquel on peut la faire quitter en pivotant au moyen d'une poignée (48).

17. Dispositif de recouvrement de l'espace de chargement selon la revendication 15 ou selon la revendication 16, **caractérisé en ce qu'**un verrou (44) du dispositif d'arrêt (au niveau de 43) agit avec les butées (45) affectées à des éléments de guidage longitudinaux (28) indépendamment de la forme de sa trajectoire de mouvement.

18. Dispositif de recouvrement de l'espace de chargement selon une des revendications 1 à 17, **caractérisé en ce qu'**un dispositif d'encliquetage directionnel qui empêche un étirement et/ou un déroulement non voulu de la bande de matériau et/ou de la bande longitudinale partielle (24, 25) est affecté à chaque arbre d'enroulement (W1, W2).
